**Europäisches Patentamt**

**European Patent Office**

**Office européen des brevets**

(19)

(11) Numéro de publication : **0 362 013 B1**

(12) **FASCICULE DE BREVET EUROPEEN**

(45) Date de publication du fascicule du brevet :
**16.06.93 Bulletin 93/24**

(51) Int. Cl.⁵ : **G21C 13/06, B25B 29/02**

(21) Numéro de dépôt : **89402518.8**

(22) Date de dépôt : **14.09.89**

(54) **Dispositif de vissage et de dévissage d'au moins un écrou sur des éléments de liaison.**

(30) Priorité : **27.09.88 FR 8812604**

(43) Date de publication de la demande :
**04.04.90 Bulletin 90/14**

(45) Mention de la délivrance du brevet :
**16.06.93 Bulletin 93/24**

(84) Etats contractants désignés :
**AT BE CH DE ES GB IT LI NL SE**

(56) Documents cités :
**EP-A- 0 003 326**
**EP-A- 0 116 488**
**DE-A- 3 318 941**
**FR-A- 2 412 384**

(73) Titulaire : **FRAMATOME**
**Tour Fiat 1, Place de la Coupole**
**F-92400 Courbevoie (FR)**

(72) Inventeur : **Frizot, Alain**
**15 Chemin Bas du Moulin**
**F-77710 Montcenis (FR)**

(74) Mandataire : **Lanceplaine, Jean-Claude et al**
**CABINET LAVOIX 2, Place d'Estienne d'Orves**
**F-75441 Paris Cédex 09 (FR)**

EP 0 362 013 B1

## Description

La présente invention a pour objet un dispositif de vissage et de dévissage d'au moins un écrou sur des éléments de liaison.

Dans les installations industrielles mettant en oeuvre des éléments de liaison vissés, on effectue généralement une traction sur lesdits éléments par l'intermédiaire d'un dispositif de tension, en vue de les maintenir en état de précontrainte et, pendant cette traction, on visse ou on dévisse un écrou de maintien en position de l'élément de liaison.

C'est notamment le cas pour les récipients sous pression utilisés par exemple dans l'industrie, notamment nucléaire, chimique ou pétrochimique, où il est nécessaire de visser ou de dévisser un écrou de serrage et de maintien sur chaque élément de liaison constitué par exemple par un goujon, tout en exerçant une traction à l'aide d'un dispositif approprié sur l'ensemble de ces éléments de liaison par l'intermédiaire d'un écrou tendeur également vissé sur chaque élément de liaison.

C'est également le cas dans l'industrie automobile et aéronautique où on utilise de nombreux éléments de liaison vissés.

Ces éléments de liaison sont généralement employés en assez grand nombre et relativement rapprochés les uns des autrese ; si bien qu'à chaque intervention, il est nécessaire de visser ou de dévisser d'une part l'écrou tendeur et d'autre part l'écrou de maintien sur chaque élément de liaison.

Ces opérations de vissage ou de dévissage successifs des différents écrous sont longues et délicates et elles ne peuvent être réalisées que de manière automatique.

On connait dans le document EP-A-0 116 488 un dispositif de vissage et de dévissage d'un écrou et d'une tête de traction disposés en vis à vis. Ce dispositif comprend un chariot de guidage et de déplacement du dispositif autour de l'anneau de mise en tension des éléments de liaison, des moyens d'entraînement dudit chariot autour dudit anneau, des moyens débrayables de déplacement et d'entrainement en rotation de la tête de traction à visser ou à dévisser et des moyens d'entrainement en rotation de l'écrou de serrage à visser ou à dévisser, lesdits moyens étant déplaçables suivant un axe parallèle à l'axe de liaison et à une vitesse identique à celle de l'écrou ou de la tête de traction en mouvement au cours de son vissage et de son dévissage.

Le but de la présente invention est de proposer un dispositif de vissage et de dévissage automatique, sur des éléments de liaison, d'écrous disposés en vis-à-vis, facilitant les procédures d'exploitation, sans pour cela nuire à la sécurité intrinsèque de l'appareil et de son environnement.

L'invention a donc pour objet un dispositif de vissage et de dévissage sur plusieurs éléments de liaison d'un écrou de serrage et d'un prolongateur disposés en vis-à-vis, ledit prolongateur de chaque élément de liaison coopérant avec un anneau de mise en tension simultanée desdits éléments de liaison, ledit dispositif comportant un chariot de guidage et de déplacement dudit dispositif autour de l'anneau de mise en tension des éléments de liaison, des moyens d'entraînement du chariot autour dudit anneau, des moyens débrayables de déplacement et d'entraînement en rotation du prolongateur à visser ou dévisser et des moyens d'entraînement en rotation de l'écrou de serrage à visser ou à dévisser, lesdits moyens d'entraînement en rotation du prolongateur et de l'écrou de serrage étant déplaçables suivant un axe parallèle à l'axe de liaison et à une vitesse identique à celle de l'écrou ou du prolongateur en mouvement au cours de son vissage et de son dévissage, caractérisé en ce que le chariot comporte une platine supportant au moins un bogie coopérant avec un chemin de roulement ménagé à la périphérie de l'anneau, des moyens d'indexage autour dudit anneau, et des moyens de verrouillage en position fixe sur cet anneau, lesdits moyens d'entraînement en rotation du chariot étant constitués par un pignon à chaîne commandé par un moteur et coopérant avec une chaîne prévue en périphérie de l'anneau, ledit pignon étant monté sur la platine et pivotant entre une position débrayée et une position engrênée sur ladite chaîne, lesdits des moyens débrayables de déplacement et d'entraînement en rotation du prolongateur étant constitués par un bras de compensation du poids dudit prolongateur et mobile verticalement dans des glissières rapportées au-dessous de la platine du chariot et lesdits moyens d'entraînement en rotation de l'écrou de serrage étant débrayables dans un plan horizontal et constitués par un arbre lisse et une vis sans fin montés sur la platine du chariot et sur lesquels se déplace un train d'engrenages.

L'invention sera mieux comprise à l'aide de la description qui va suivre, donnée uniquement à titre d'exemple et faite en référence aux dessins annexés, sur lesquels :

- la figure 1 est une vue schématique de dessus d'un anneau de mise en tension des éléments de liaison et sur lesquels se déplace le dispositif de vissage et de dévissage conforme à l'invention,
- la figure 2 est une vue en élévation de l'ensemble du dispositif selon l'invention,
- la figure 3 est une vue de dessus du dispositif selon l'invention,
- la figure 4 est une vue en coupe selon la ligne 4-4 de la figure 2,
- la figure 5 est une vue en élévation du chariot de support et de guidage du dispositif,
- la figure 6 est une vue de dessus de la figure 5,
- la figure 7 est une vue schématique en coupe du mécanisme d'entraînement du dispositif autour de l'anneau de mise en tension,

- la figure 8 est une vue schématique en perspective du train d'engrenages de vissage ou de dévissage de l'écrou de serrage sur l'élément de liaison,

- la figure 9 est une vue schématique en perspective du système de détection de la position du train d'engrenage de vissage ou de dévissage de l'écrou de serrage.

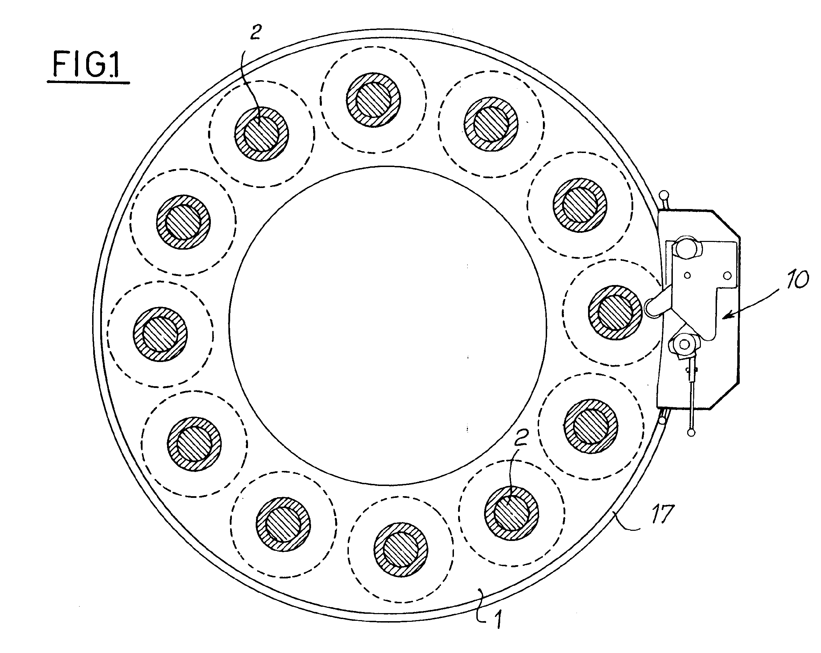

On a représenté sur la figure 1 un anneau 1 de mise en tension simultanée de plusieurs éléments de liaison 2 constitués par exemple par des goujons de grandes dimensions d'axe vertical.

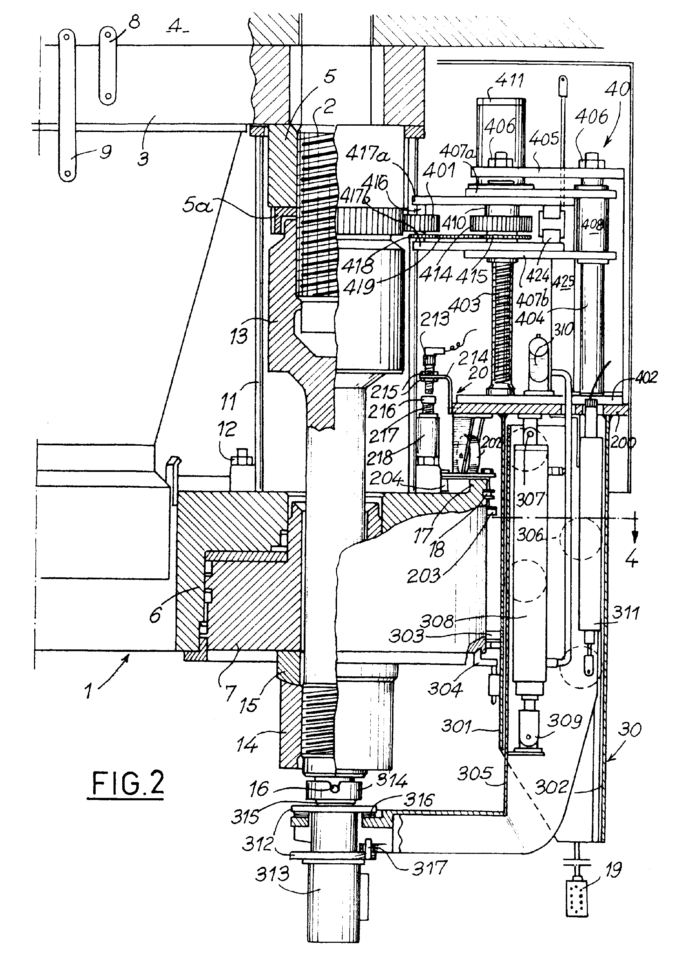

Ces éléments de liaison 2 sont destinés à maintenir une bride 3 par exemple sur une bride fixe 4 d'une cuve ou d'une enveloppe sous pression (figure 2) à la périphérie de laquelle sont régulièrement répartis lesdits éléments de liaison 2.

La bride circulaire 3 est appliquée contre la bride fixe 4 au moyen des éléments de liaison 2 qui sont, à cet effet, bloqués chacun par un écrou de serrage 5. Chaque écrou de serrage 5 est muni d'une couronne dentée 5a.

L'anneau 1 de mise en tension est circulaire et comporte autant de cylindres 6 que d'éléments de liaison 2. Ces cylindres 6, taillés dans la masse de l'anneau 1, sont équidistants les uns des autres et sont pourvus chacun d'un piston 7 disposant de moyens d'étanchéité fonctionnant à l'aide d'un fluide sous pression.

Pendant les opérations de mise en tension des éléments de liaison, de vissage ou de dévissage, la bride 3 est suspendue à la bride 4 au moyen d'organes de liaison 8 constitués par exemple par des biellettes. De même, l'anneau d'extension 1 est suspendu sous la bride 3 au moyen d'organes de liaison 9 constitués par exemple par des biellettes, accrochées à des entretoises 11 qui sont fixées sur l'anneau 1 à l'aide d'une boulonnerie 12.

Sur l'extrémité filetée de l'organe de liaison 2 est vissé, en vis-à-vis de l'écrou de serrage 5, un prolongateur 13 qui traverse le piston 7 et comporte à son extrémité opposée un écrou 14 muni d'une rondelle 15 à portée sphérique. D'autre part, le prolongateur 13 comporte à sa base deux ergots 16 destinés à transmettre le mouvement circulaire de vissage ou de dévissage comme on le verra ultérieurement.

L'anneau 1 de mise en tension est équipé, sur sa périphérie, d'un chemin de roulement 17 rapporté ou usiné dans la masse et sur lequel se déplace le dispositif de vissage et de dévissage désigné dans son ensemble par la référence 10.

Le dispositif de vissage et de dévissage se compose de trois sous ensembles :

- un chariot 20 de support et de guidage sur le chemin de roulement 17 de l'ensemble du dispositif,

- un système de vissage ou de dévissage 30 du prolongateur 13 sur l'extrémité de liaison 2,

- et un système de vissage ou de dévissage 40 de l'écrou de serrage 5.

En se reportant tout d'abord aux figures 2, 3, 5 et 6 on va décrire le chariot 20.

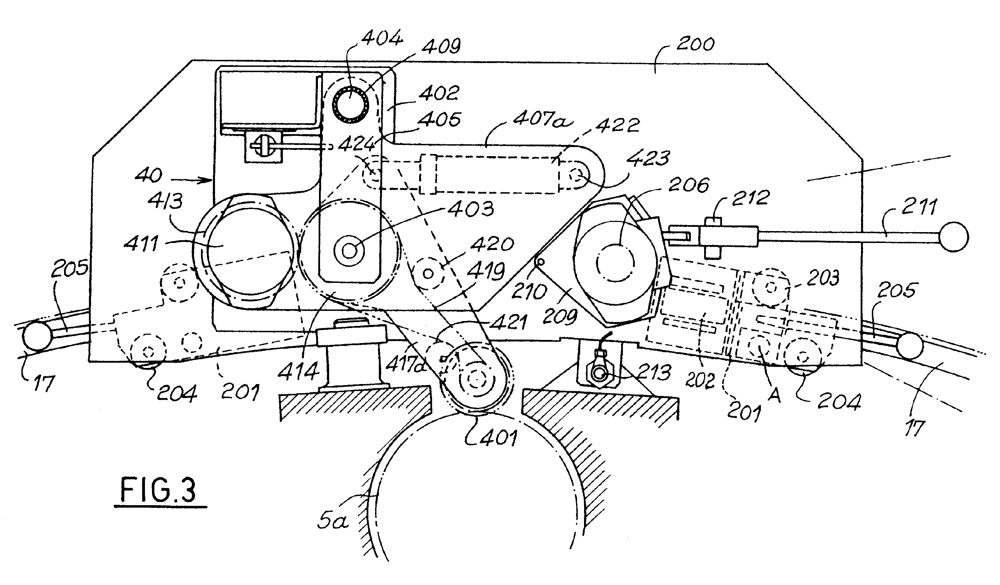

Le chariot 20 se compose d'une platine horizontale 200 au-dessous de laquelle sont fixées par des moyens de liaison connus, non représentés, deux bogies 201 (figures 3, 5 et 6).

Chaque bogie 201 comporte une roulette porteuse 202, un galet fixe 203 roulant horizontalement sur l'extérieur du chemin de roulement 17 et un galet réglable 204 roulant horizontalement sur l'intérieur dudit chemin de roulement.

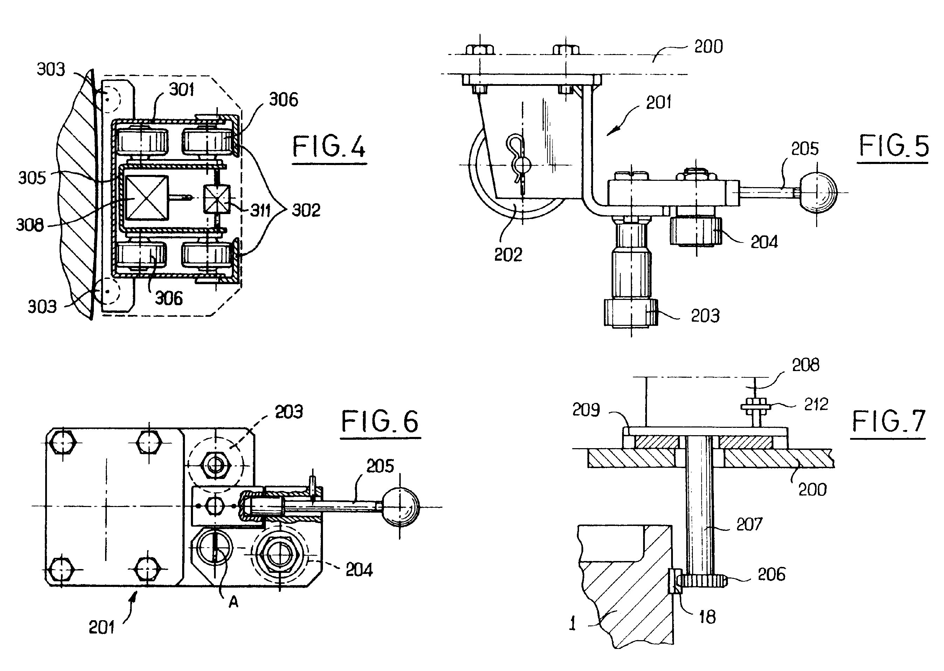

Le galet réglable 204 est monté sur un levier pivotant autour d'un axe vertical A (figures 3 et 6) et indexable en position de travail au moyen d'une tige 205.

Le déplacement périphérique du chariot 200 et de l'ensemble du dispositif autour de l'anneau 1 de mise en tension est assuré par un pignon à chaîne 206 monté en bout d'un arbre 207 d'un moteur hydraulique 208 (figure 7). Ce pignon 206 est solidaire d'une embase 209 montée pivotante autour d'un pivot vertical 210 prévu sur la platine 200 (figure 3).

Le pignon 206 vient s'engrener sur une chaîne à rouleaux 18 fixée dans une gorge usinée en périphérie de l'anneau 1 de mise en tension.

Le pivotement de l'embase 209 autour du pivot 210 est commandé par un levier 211 ce qui permet de dégager le pignon 206 de la chaîne 18 lorsque le dispositif doit être démonté, et en fonctionnement, le levier 211 vient s'encliqueter dans une butée réglable 212 (figure 3) de façon à maintenir le pignon 206 en prise sur la chaîne périphérique 18.

L'indexage périphérique de l'ensemble du dispositif 10 autour de l'anneau 1 de mise en tension est assuré par le chariot 20 qui comporte, à cet effet, un capteur de proximité 213 (figures 2 et 3) fixé à l'extrémité d'une équerre 214 solidaire de la platine 200. Le capteur 213 comporte deux écrous 215 qui permettent son réglage vertical.

Le capteur 213 coopère avec une cible réceptrice 216 constituée par la tête d'une vis 217 montée dans un manchon taraudé 218 qui est vissé sur une surlongueur du goujon de fixation extérieur 12 de chacune des entretoises 11.

Le dispositif comporte donc un seul capteur solidaire du chariot 20 et autant de cibles réceptrices que d'éléments de liaison 2. Le jeu de fonctionnement entre le capteur 213 et la cible réceptrice 216 est réglé au moyen de la vis 217.

On va maintenant décrire, en se reportant aux figures 2 et 4, le système de vissage ou de dévissage 30 du prolongateur 13 sur l'extrémité de l'élément de liaison 2.

Ce système comprend une glissière fixe 301 en forme de "U" horizontal et de nature métallique, rapportée sur la platine 200 par exemple par soudure. Sur l'extrémité de chaque branche de la glissière 301 est fixée une glissière amovible et réglable 302.

La glissière fixe 301 est également équipée à mi hauteur d'une part de deux galets 303 complémentaires à axe vertical roulant sur la face latérale de l'anneau 1 et d'autre part d'un verrou escamotable 304 (figure 2) venant prendre position dans une rainure périphérique de l'anneau 1. Le verrou 304 permet un positionnement sans tenir compte d'aucune référence.

A l'intérieur des glissières 301 et 302 est monté un bras de compensation 305 qui comporte une partie verticale et une extrémité horizontale. La partie verticale du bras de compensation 305 est munie de roulettes 306 qui permettent à ce dernier de coulisser sans frottement dans l'ensemble constitué par les glissières 301 et 302.

Le bras de compensation 305 est suspendu sous la platine 200 par l'intermédiaire d'un oeilleton 307 sous lequel est accroché un vérin hydraulique à double effet 308 qui est lui-même fixé au bras 305 par un oeilleton 309. Le vérin 308 est raccordé à un accumulateur oléopneumatique 310.

La position verticale du bras de compensation 305 est détectée par un potentiomètre rectiligne 311 dont l'une des extrémités est fixée à la platine 200 et dont l'autre est fixée au bras 305.

L'extrémité horizontale du bras de compensation 305 supporte par l'intermédiaire d'un flasque 312, un moteur 313 hydraulique ou autre, qui entraîne une coupelle 314 pour le vissage ou le dévissage du prolongateur 13 par l'intermédiaire des ergots 16. La coupelle 314 repose sur une butée à billes 315 et le flasque 312 repose sur une rondelle autolubrifiante 316. Le flasque 312 est monté avec un jeu radial suffisant pour permettre à l'ensemble constitué par le flasque 312, le moteur 313 et la coupelle 314 de s'auto-aligner avec l'axe de référence du prolongateur 13.

Un pion 317 logé dans un alvéole circulaire du bras 305 maintient le flasque 312 en position de façon à éviter, lors du démarrage du moteur 313, tout mouvement de rotation.

Le système de vissage ou de dévissage 40 (figures 2 et 3) a pour objet de transmettre un mouvement de rotation à l'écrou de serrage 5 au moyen d'un pignon 401 entraîné par une motorisation fixée sur le chariot 20.

Pour cela, ce système comporte une embase 402 fixée sur la platine 200, une vis sans fin 403 de pas P2 égale au pas de l'écrou de serrage 5, inversé, et un arbre lisse 404. La vis 403 et l'arbre 404 verticaux sont fixés par leur base dans l'embase 402 et reliés à leur sommet par une barrette 405 maintenue à l'aide d'écrous 406.

Le système comporte également deux flasques 407a et 407b reliés entre eux à une de leurs extrémités par un manchon 408 monté sur l'arbre lisse 404 par l'intermédiaire d'une douille à billes 409 permettant ainsi audit manchon de coulisser sans effort le long de l'arbre 404. L'autre extrémité des flasques 407a et 407b est montée libre en rotation sur un manchon 410 vissé sur la vis sans fin 403 au moyen d'un taraudage de pas P2, à gauche.

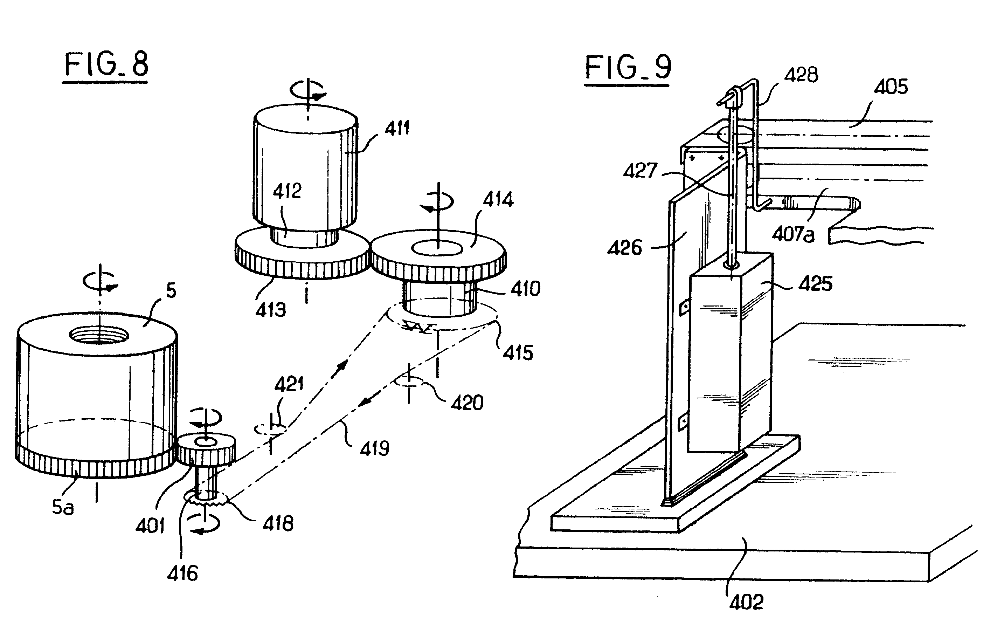

Le flasque supérieur 407a supporte un moteur hydraulique 411 dont l'arbre 412 (figure 8) entraîne en rotation une roue dentée 413 disposée sous le flasque 407a. Cette roue dentée 413 engrène avec une roue dentée 414 clavetée sur le manchon 410 qui est lui-même solidaire en rotation avec un pignon à chaîne 415.

Par ailleurs, le pignon 401 est claveté sur un arbre 416 monté libre en rotation entre deux petits flasques 417a et 417b disposés entre les flasques 407a et 407b. De plus, les flasques 417a et 417b sont montés libres en rotation sur le manchon 410.

Sur l'arbre 416 est également monté, solidaire en rotation, un pignon à chaîne 418 relié au pignon à chaîne 415 du manchon 410 par une chaîne à rouleaux 419 équipée de tendeurs 420 et 421 (figures 3 et 8).

L'ensemble constitué par les petits flasques 417a, 417b, le pignon 401, l'arbre 416 et le pignon à chaîne 418 peut pivoter autour du manchon 410 sous l'action d'un vérin 422 (figure 3), pour permettre l'accostage du pignon 401 sur la couronne dentée 5a de l'écrou de serrage 5.

Le vérin 422 a l'une de ses extrémités fixée sur un axe 423 solidaire des flasques 407a et 407b et l'autre de ses extrémités fixée sur un axe 424 solidaire des petits flasques 417a et 417b.

Comme représenté à la figure 9, la position verticale du pignon 401 peut être connue à tout instant à l'aide d'un potentiomètre 425. Ce potentiomètre est fixé sur une plaque verticale 426 solidaire de l'embase 402 et de la barrette 405, ladite plaque 426 servant également de raidisseur pour la vis 403 et l'arbre 404.

Le curseur 427 du potentiomètre 425 est actionné par une tige 428 reliée au flasque supérieur 407a qui suit les déplacements du pignon 401.

La commande des différents systèmes est assurée par une boîte à boutons 19 (figure 2) qui se déplace avec le chariot 20.

Le fonctionnement du dispositif ainsi décrit est le suivant :

Après avoir vissé les éléments de liaison 2 sur la bride fixe 4 et placé la bride 3 sur ladite bride fixe 4, au moyen de biellettes 8, on visse sur l'extrémité filetée de chaque élément de liaison 2 l'écrou de serrage 5.

Ce vissage est effectué par exemple à l'aide d'une visseuse électrique ou pneumatique, non représentée, dont le couple est réglé à une valeur relativement faible permettant d'arrêter le vissage dès que l'écrou 5 vient en contact de la bride 3.

Une fois cette opération réalisée sur l'ensemble des éléments de liaison 2, on engage sur l'extrémité filetée de chacun desdits éléments de liaison, le prolongateur 13, puis on met en place l'anneau 1 qui est supporté par la bride 3 au moyen des entretoises 11. L'extrémité libre des prolongateurs 13 traverse avec jeu les pistons 7 de l'anneau 1.

Ensuite, on visse complètement chaque prolongateur par le dispositif de vissage automatique 10.

Pour cela, on embraye par l'intermédiaire du levier 211, le pignon 206 sur la chaîne à rouleaux 18. Le moteur 208 entraîne le pignon 206 et l'ensemble du dispositif se déplace sur le chemin de roulement 17 grâce aux bogies 201.

Dès que le capteur 213 arrive en vis-à-vis d'une cible réceptrice 216, le moteur 208 s'arrête si bien que l'extrémité du bras de compensation 305 se trouve en face d'un élément de liaison 2. Le verrou 304 est alors engagé dans une rainure périphérique de l'anneau 1.

L'opérateur commande par l'intermédiaire de la boîte à boutons 19 le vérin 308 de manière à déplacer verticalement le bras 305 dans les glissières 301, 302.

L'accumulateur oléopneumatique 310 fournit au départ un effort un peu supérieur au poids de l'ensemble constitué par le prolongateur 13, l'écrou 14 et la rondelle 15 poussant ainsi cet ensemble verticalement en direction de l'accostage sur le filet de l'élément de liaison 2.

Le moteur 313 entraîne en rotation par la coupelle 314 et les ergots 16 le prolongateur 13 qui se visse sur l'extrémité filetée de l'élément de liaison 2 et à mesure que le vissage s'effectue, l'accumulateur oléopneumatique 310 se décharge et l'effort de poussée diminue, mais ne descend pas au-dessous de la masse de l'ensemble en mouvement. Le vissage s'effectue donc avec un effort résistant vertical très faible.

La fonction du bras 305 est double, car il permet la compensation du poids du prolongateur lors des opérations de vissage et de dévissage, et il permet un entraînement du prolongateur en rotation au moyen du moteur 313 tout en l'accompagnant le long de son déplacement à une vitesse identique et sans interruption jusqu'à sa position désirée.

Une fois cette opération réalisée, l'opérateur commande la descente du bras 305, le déverrouillage du chariot 20 et la remise en route du moteur 208 entraînant à nouveau l'ensemble du dispositif jusqu'au prochain élément de liaison.

On renouvelle l'opération de vissage pour chaque prolongateur.

Il est à noter que l'accumulateur oléopneumatique 310 donne une grande souplesse de fonctionnement, assurant ainsi une poussée permanente égale au poids du prolongateur au départ et décroissante à mesure que l'accumulateur se vide. Ce dernier étant réglé pour donner un effort voisin du poids du prolongateur en fin de course, le vissage des derniers filets se fait avec un effort vertical résistant proche de zéro, c'est-à-dire, qu'au fur et à mesure du vissage c'est le goujon lui-même qui prend en charge le poids du prolongateur 13.

Le support flottant du moteur 313 assure le fonctionnement même en cas de décalage horizontal de l'élément de liaison 2 dans son logement.

A tout instant, il est possible de connaître l'altitude du bras de compensation 305 et la validité des lectures de position dudit bras est liée au contact permanent de la coupelle 314 sous la base du prolongateur. Cette condition est remplie grâce à l'accumulateur oléopneumatique 310.

Quand l'ensemble des prolongateurs est vissé, on alimente en fluide moteur simultanément l'ensemble des vérins de l'anneau 1 par un système approprié, non représenté, de façon à exercer une traction et une mise en tension de l'ensemble des éléments de liaison 2 par l'intermédiaire des pistons 7, des rondelles 15 et des écrous 14.

Tout en maintenant l'ensemble des éléments de liaison 2 en extension, on complète le vissage des écrous de serrage 5 par le dispositif de vissage 10.

Pour cela, le moteur 208 entraîne le pignon 206 et l'ensemble du dispositif se déplace sur le chemin de roulement 17. Dès que le capteur 213 arrive en vis-à-vis d'une cible réceptrice 216, le moteur 208 s'arrête et le verrou 304 est engagé dans la rainure périphérique de l'anneau 1 de façon à maintenir l'ensemble en position.

Le pignon 401 est en position écartée et on positionne en altitude le train d'engrenages 413, 414, 401 en vis-à-vis de la couronne dentée 5a de l'écrou de serrage 5 en mettant en marche le moteur 411 qui entraîne en rotation le pignon 413, le pignon 414 et la chaîne 419. Le pignon 414 solidaire du manchon 410 entraîne celui-ci en rotation qui tourne donc sur la vis 403 provoquant le déplacement des flasques 407a, 407b, 417a, 417b et du pignon 401.

Dès que la position du pignon 401 détectée par le potentiomètre 425 correspond à la position de la couronne dentée 5a, le moteur 411 s'arrête automatiquement. Le vérin 422 commande le pivotement des flasques 417a, 417b autour du manchon 410, jusqu'à ce que le pignon 401 vienne s'engrener sur la couronne dentée 5a. Pour faciliter l'engrènement des dents, le moteur 411 est remis en marche au moment où s'opère l'accostage. Ce moteur entraîne le pignon 413 qui entraîne à son tour le pignon 414, le manchon 410, le pignon à chaîne 415 et la chaîne 419.

Cette chaîne entraîne à son tour le pignon à chaîne 418 et le pignon 401 qui entraîne la couronne dentée 5a provoquant ainsi le vissage de l'écrou 5.

Si l'on désigne par :
- P1 le pas de l'écrou 5,
- P2 le pas de la vis 403 et du manchon 410 (gauche),

- Z 5a le nombre de dents de la couronne dentée 5a,
- Z 401 le nombre de dents du pignon 401,
- Z 418 le nombre de dents sur le pignon à chaîne 418,
- Z 415 le nombre de dents sur le pignon à chaîne 415,
- Z 414 le nombre de dents sur la roue dentée 414,
- Z 413 le nombre de dents sur la roue dentée 413 (motrice).

Les rapports sont les suivants :

$$Z\ 5a\ =\ N \times Z\ 401\ et\ Z\ 415\ =\ N \times Z\ 418$$

Ce qui fait que le pignon à chaîne 415 tourne à la même vitesse W 415, en sens inverse, que la couronne dentée 5a.

$$Z\ 414\ =\ Z\ 413$$

Par conséquent W 414 = W 415 pignon lié en rotation.

W 401 = W 418 pignon lié en rotation.

Par conséquent le pignon moteur 413 tourne à la même vitesse que la couronne dentée 5a de l'écrou de serrage 5.

On peut remarquer que lorsque l'écrou 5 se visse sur l'élément de liaison 2, il monte de un pas P1 par tour et que le manchon 410 qui tourne à la même vitesse entraîne l'ensemble des flasques 407a, 407b, 417a, 417b dans la même direction verticale et à la même vitesse de déplacement vertical que l'écrou 5.

Par conséquent le moyen d'entraînement constitué par le train d'engrenages accompagne totalement l'écrou lors de son mouvement vertical, soit ascendant pour le vissage, soit descendant pour le dévissage.

La position de l'axe vertical du pignon 401 peut être connue à tout instant à l'aide du potentiomètre 425 dont le curseur 427 suit le déplacement du flasque supérieur 407a.

Au cours de cette opération, l'arbre 404 constitue un guidage et un moyen d'anti-rotation lors du démarrage du moteur 411.

Sitôt le vissage de l'écrou 5 effectué, l'opérateur arrête le moteur 411 et sous l'action du vérin 422 écarte le pignon 401 de la couronne dentée 5a.

Ensuite, on renouvelle l'opération sur chaque écrou de serrage 5 en déplaçant le dispositif 10 sur le chemin de roulement 17.

Le dispositif, selon l'invention, permet donc d'effectuer automatiquement les opérations de vissage et de dévissage d'une série d'écrous disposés selon un même axe vertical commun, tout en les accompagnant le long de leur déplacement. Ils permettent également une rapidité d'intervention, dûe au fait que le chariot motorisé s'arrête automatiquement en vis-à-vis de chacun des éléments de liaison. Les bogies compacts permettent un réglage simple lors du montage et un dégagement rapide des galets escamotables lorsqu'il faut démonter le chariot pendant les périodes de non fonctionnement.

Le verrou 304 peut être équipé d'un asservissement pneumatique ou hydraulique composé d'éléments connus, et il protège les galets des bogies et surtout leurs axes d'une torsion excessive lorsque le prolongateur repose sur le bras de compensation.

Néanmoins, ce verrou est équipé d'une sécurité électrique du type capteur de proximité interdisant le roulage du chariot dans le cas où le verrou est resté engagé.

Par ailleurs, le dispositif permet également d'appliquer un couple de manoeuvre constant pendant toute la durée de l'opération, évitant ainsi la création de forces parasites pouvant provoquer un échauffement des surfaces en contact et une flexion de la partie libre des éléments de liaison.

Le dispositif suivant l'invention s'applique notamment aux cuves, enveloppes sous pression, trous d'homme, trous de poing, turbines, vannes hydrauliques, pour la fixation d'un élément d'obturation dans les installations telles que nucléaires, pétrochimiques ou chimiques et également dans l'industrie automobile et aéronautique. De façon générale le dispositif s'applique dans le cadre de nombreuses installations industrielles mettant en oeuvre des éléments de liaison vissés.

## Revendications

1. Dispositif de vissage et de dévissage sur plusieurs éléments de liaison (2) d'un écrou de serrage (5) et d'un prolongateur (13) disposés en vis-à-vis, ledit prolongateur (13) de chaque élément de liaison (2) coopérant avec un anneau (1) de mise en tension simultanée desdits éléments de liaison, ledit dispositif comportant un chariot (20) de guidage et de déplacement dudit dispositif autour de l'anneau (1) de mise en tension des éléments de liaison (2), des moyens (206, 207, 208) d'entraînement du chariot (20) autour dudit anneau (1), des moyens (30) débrayables de déplacement et d'entraînement en rotation du prolongateur (13) à visser ou dévisser et des moyens (40) d'entraînement en rotation de l'écrou de serrage (5) à visser ou à dévisser, lesdits moyens d'entraînement en rotation du prolongateur (13) et de l'écrou de serrage (5) étant déplaçables suivant un axe parallèle à l'axe de liaison (2) et à une vitesse identique à celle de l'écrou (5) ou du prolongateur (13) en mouvement au cours de son vissage et de son dévissage, caractérisé en ce que le chariot (20) comporte une platine (200) supportant au moins un bogie (201) coopérant avec un chemin de roulement (17) ménagé à la périphérie de l'anneau (1), des moyens (213) d'indexage autour dudit anneau (1), et des moyens de verrouillage (304) en position fixe sur cet anneau (1), lesdits moyens (206,207,208) d'entraînement en rotation du chariot (20) étant constitués par un pignon à chaîne (206) commandé par un moteur (208) et coopérant avec une chaîne (18) prévue en périphérie de l'anneau (1), ledit pignon (206) étant monté sur la platine (200) et pivotant entre une position débrayée et une position engrênée sur ladite chaîne (18), lesdits moyens (30) débrayables de déplacement et d'entraînement en rotation du prolongateur (13) étant constitués par un bras (305) de compensation du poids dudit prolongateur (13) et mobile verticalement dans des glissières (301, 302) rapportées au-dessous de la platine (200) du chariot (20) et lesdits moyens (40) d'entraînement en rotation de l'écrou de serrage (5) étant débrayables dans un plan horizontal et constitués par un arbre lisse (404) et une vis sans fin (403) montés sur la platine (200) du chariot (20) et sur lesquels se déplace un train d'engrenages (401, 410, 414, 415, 418).

2. Dispositif selon la revendication 1, caractérisé en ce que le bogie (201) comporte une roulette porteuse (202), un galet fixe (203) roulant horizontalement sur l'extérieur du chemin de roulement (17) et un galet débrayable et roulant horizontalement sur l'intérieur dudit chemin de roulement.

3. Dispositif selon la revendication 1, caractérisé en ce que les moyens d'indexage sont constitués par un capteur de proximité (213), réglable verticalement, solidaire de la platine (200) et coopérant avec une cible réceptrice (216) disposée au niveau de chaque élément de liaison (2).

4. Dispositif selon la revendication 1, caractérisé en ce que le bras (305) comporte une partie verticale et une partie horizontale supportant des organes (313, 314, 315) d'entraînement en rotation du prolongateur (13).

5. Dispositif selon les revendications 1 et 4, caractérisé en ce que les déplacements verticaux du bras (305) sont commandés par un vérin (308) à double effet raccordé à un accumulateur oléopneumatique (310).

6. Dispositif selon la revendication 5, caractérisé en ce que l'un des éléments du vérin (308) est fixé sur la platine (200) du chariot (20) et l'autre des éléments est fixé sur le bras (305).

7. Dispositif selon la revendication 1, caractérisé en ce que le bras (305) comporte des moyens (311) de détection de sa position.

8. Dispositif selon la revendication 1, caractérisé en ce que le train d'engrenages comprend un pignon (401) monté pivotant, sous l'action d'un organe de commande (422), entre une première position dans laquelle il est embrayé tangentiellement sur l'écrou (5) et une seconde position dans laquelle il est débrayé dudit écrou.

9. Dispositif selon les revendications 1 et 8, caractérisé en ce que le pignon (401) est supporté par des flasques (417a, 417b) montés libres en rotation sur un manchon (410) vissé sur la vis sans fin (403) et dont les extrémités opposées au pignon (401) sont reliées à l'organe de commande (422).

10. Dispositif selon l'une des revendications 1, 8 et 9, caractérisé en ce que le pignon (401) est monté sur un arbre (416) libre en rotation sur les flasques (417a, 417b) et entraîné par un pignon à chaîne (418) coopérant avec une chaîne (419).

11. Dispositif selon la revendication 10, caractérisé en ce que la chaîne (419) est entraînée par un pignon à chaîne (415) solidaire du manchon (410) qui est lui-même solidaire en rotation avec un pignon (414) coopérant avec un pignon (413) entraîné par un moteur (411).

**Claims**

1. Apparatus for screwing a clamp nut (5) and an extension piece (13), arranged opposite each other, onto a plurality of connecting members (2) or for unscrewing said clamp nut and extension piece from said plurality of connecting members, said extension piece (13) of each connecting member (2) cooperating with a ring (1) for simultaneously tensioning said connecting members, said apparatus comprising a carriage (20) for guiding and displacing said apparatus around the ring (1) for tensioning the connecting members (2), means (206, 207, 208) for driving said carriage (20) around said ring (1), disengageable means (30) for displacing and rotationally driving the extension piece (13) which is to be screwed on or off, and means (40) for rotationally driving the clamp nut (5) which is to be screwed on or off, said rotational drive means for the extension piece (13) and clamp nut (5) being movable along an axis parallel to the connecting axis (2) and at a speed identical to that of the nut (5) or extension piece (13) as they move during the screwing and unscrewing operations, characterised in that the carriage (20) has a plate (200) supporting at least one bogie (201) cooperating with a running track (17) provided on the periphery of the ring (1), indexing means (213) around said ring (1) and means for locking (304), in a fixed position on said ring (1), the means (206, 207, 208) for rotationally driving the carriage (20) consisting of a sprocket wheel (206) controlled by a motor (208) and cooperating with a chain (18) provided on the periphery of the ring (1), said sprocket wheel (206) being mounted on the plate (200) and pivoting between a disengaged position and a position in which it meshes with said chain (18), said disengageable means (30) for displacing and rotationally driving the extension piece (13) consisting of an arm (305) compensating for the weight of said extension piece (13) and vertically movable in slideways (301, 302) mounted underneath the plate (200) of the carriage (20) and said means (40) for rotationally driving the clamp nut (5) being disengageable in a horizontal plane and consisting of a smooth shaft (404) and a worm (403) mounted on the plate (200) of the carriage (20), on which a gear train (401, 410, 414, 415, 418) is displaced.

2. Apparatus according to claim 1, characterised in that the bogie (201) comprises a carrier roller (202), a fixed roller (203) rolling horizontally on the outside of the running track (17) and a disengageable roller which rolls horizontally on the inside of said running track.

3. Apparatus according to claim 1, characterised in that the indexing means consist of a proximity sensor (213) which is vertically regulatable, integral with the plate (200) and cooperating with a receiving target (216) arranged level with each connecting member (2).

4. Apparatus according to claim 1, characterised in that the arm (305) comprises a vertical part and a horizontal part supporting members (313, 314, 315) for rotationally driving the extension piece (13).

5. Apparatus according to claims 1 and 4, characterised in that the vertical movements of the arm (305) are controlled by a double-acting jack (308) connected to a pneumo-oil accumulator (310).

6. Apparatus according to claim 5, characterised in that one of the elements of the jack (308) is fixed to the plate (200) of the carriage (20) and the other element is fixed to the arm (305).

7. Apparatus according to claim 1, characterised in that the arm (305) comprises means (311) for detecting its position.

8. Apparatus according to claim 1, characterised in that the gear train comprises a pinion (401) mounted so as to be pivotable, under the effect of a control member (422), between a first position in which it engages tangentially on the nut (5) and a second position in which it is disengaged from said nut.

9. Apparatus according to claims 1 and 8, characterised in that the pinion (401) is supported by end plates (417a, 417b) mounted to be freely rotatable on a sleeve (410) screwed onto the worm (403), the ends of the end plates remote from the pinion (401) being connected to the control member (422).

10. Apparatus according to one of claims 1, 8 and 9, characterised in that the pinion (401) is mounted on a shaft (416) which is freely rotatable on the end plates (417a, 417b) and driven by a sprocket wheel (418) cooperating with a chain (419).

11. Apparatus according to claim 10, characterised in that the chain (419) is driven by a sprocket wheel (415) fixed to the sleeve (410) which is in turn fixed for rotation with a pinion (414) cooperating with a pinion (413) driven by a motor (411).

**Patentansprüche**

1. Vorrichtung zum Aufschrauben und Abschrauben einer Stellmutter (5) und eines Verlängerungsstücks (13), die einander gegenüberliegen, an mehrere Verbindungselemente (2), wobei dieses Verlängerungsstück (13) jedes Verbindungselements (2) mit einem Ring (1) zusammenarbeitet, mit dem die genannten Verbindungselemente gleichzeitig gespannt werden können, wobei die genannte Vorrichtung über einen Wagen zum Führen und Bewegen (20) der genannten Vorrichtung um den genannten Spannungsring (1) für die Verbindungselemente (2) sowie über Vorrichtungen (206, 207, 208) für den Antrieb des Wagens (20) um den besagten Ring (1) herum verfügt, außerdem über bewegliche Vorrichtungen (30), mit denen das Verlängerungsstück (13) zum Auf- oder Abschrauben bewegt und in Drehung versetzt werden kann, sowie über Vorrichtungen (40) zum Drehantrieb der auf- oder abzuschraubenden Stellmutter (5), wobei die Vorrichtungen für den Drehantrieb des Verlängerungsstücks (13) und der Stellmutter (5) entlang einer zur Verbindungsachse (2) parallelen Achse verschiebbar sind, und zwar mit der gleichen Geschwindigkeit wie die der Stellmutter (5) oder des Verlängerungsstücks (13), die während ihres Auf- und Abschraubens in Bewegung sind, dadurch gekennzeichnet, daß der Wagen (20) eine Platte (200) aufweist, die mindestens ein Fahrgestell (201) trägt, das in einen Laufweg (17) paßt, der am Umfang des Rings (1) gearbeitet ist, sowie Indexierungsvorrichtungen (213) um den genannten Ring (1) herum und Vorrichtungen (304) zum Verriegeln in fester Lage auf diesem Ring (1), wobei die genannten Vorrichtungen (206, 207, 208) für den Drehantrieb des Wagens (20) aus einer über einen Motor (208) gesteuerten Kettennuß (206) bestehen und mit einer Kette (18) zusammenarbeiten, die am Umfang des Rings (1) vorgesehen ist, und die genannte Kettenuß (206) auf die Platte (200) montiert ist und zwischen einer von der Kette gelösten und einer in diese Kette (18) eingreifenden Position hin- und herschwenkt, wobei die genannten beweglichen Vorrichtungen (30) zum Versetzen und Antrieb in Drehung des Verlängerungsstücks (13) aus einem Arm (305) zum Gewichtsausgleich des genannten Verlängerungsstücks (13) bestehen, der vertikal in Gleitschienen (301, 302) beweglich ist, die von unten an die Platte (200) des Wagens (20) gesetzt sind, und daß die genannten Vorrichtungen (40) zum Drehantrieb der Stellmutter (5) auf einer horizontalen Ebene beweglich sind und aus einem glatten Arm (404) und einer Schraube ohne Ende (403) bestehen, die auf die Platte (200) des Wagens (20) montiert sind, und auf denen sich ein Getriebezug (401, 410, 414, 415, 418) hin- und herbewegt.

2. Vorrichtung nach Anspruch 1, dadurch gekennzeichnet, daß das Untergestell (201) eine Tragrolle (202), eine feste Rolle (203), die horizontal auf der Außenseite des Laufwegs (17) läuft, und eine bewegliche Rolle (204), die horizontal auf der Innenseite des genannten Laufwegs läuft, aufweist.

3. Vorrichtung nach Anspruch 1, dadurch gekennzeichnet, daß die Indexierungsvorrichtungen aus einem Abstandsmelder (213) bestehen, der vertikal verstellbar, fest mit der Platte (200) verbunden und in Höhe jedes Verbindungselements (2) angeordnet ist.

4. Vorrichtung nach Anspruch 1, dadurch gekennzeichnet, daß der Arm (305) einen vertikalen und einen horizontalen Bereich aufweist, an denen Vorrichtungen (313, 314, 315) für den Drehantrieb des Verlängerungsstücks (13) sitzen.

5. Vorrichtung nach den Ansprüchen 1 und 4, dadurch gekennzeichnet, daß die Vertikalbewegungen des Arms (305) über einen doppeltwirkenden Zylinder (308) gesteuert werden, der an einen pneumatisch-ölhydraulischen Akku (310) angeschlossen ist.

6. Vorrichtung nach Anspruch 5, dadurch gekennzeichnet, daß eines der Elemente des Zylinders (308) an der Platte (200) des Wagens (20) und das andere am Arm (305) befestigt ist.

7. Vorrichtung nach Anspruch 1, dadurch gekennzeichnet, daß der Arm (305) über Vorrichtungen (311) zum Feststellen seiner Position verfügt.

8. Vorrichtung nach Anspruch 1, dadurch gekennzeichnet, daß der Getriebezug ein schwenkbar montiertes Ritzel (401) aufweist, das über eine Steuervorrichtung (422) zwischen einer ersten Position, in der es tangential in die Mutter (5) eingreift, und einer zweiten Position, in der es von der Mutter gelöst ist, bewegt werden kann.

9. Vorrichtung nach den Ansprüchen 1 und 8, dadurch gekennzeichnet, daß das Ritzel (401) von Flanschen (417a, 417b) getragen wird, die frei drehbar auf einen Stutzen (410) montiert sind, der auf die Schraube ohne Ende (403) geschraubt ist, und dessen dem Ritzel (401) abgewandte Enden mit der Steuervorrichtung (422) verbunden sind.

10. Vorrichtung nach einem der Ansprüche 1, 8 und 9, dadurch gekennzeichnet, daß das Ritzel (401) auf eine Welle (416) montiert ist, die sich frei an den Flanschen (417a, 417b) drehen kann und von einer Kettennuß (418), die mit einer Kette (419) zusammenarbeitet, angetrieben wird.

11. Vorrichtung nach Anspruch 10, dadurch gekennzeichnet, daß die Kette (419) durch eine Kettennuß (415) angetrieben wird, die fest mit dem Stutzen (410) verbunden ist, der selbst drehend fest mit einem Ritzel (414) verbunden ist, das mit einem von einem Motor (411) angetriebenen Ritzel (413) zusammenarbeitet.

FIG.1

EP 0 362 013 B1

FIG.2

FIG.3

FIG.4

FIG.5

FIG.6

FIG.7

FIG.8

FIG_9

EP 0 362 013 B1